# EUROPEAN PATENT APPLICATION

(11) **EP 0 568 922 A1**
(43) Date of publication of application: **10.11.1993**
(21) Application number: 93106963.7
(22) Date of filing: 29.04.1993
(51) Int. Cl.: C08K 13/02, C08L 57/08

(54) **Rigid thermoplastic halopolymer compounds and method for reduction of heat release**

(30) Priority: 04.05.1992 US 877938
(71) Applicant: THE B.F. GOODRICH COMPANY, Akron Ohio 44313-1799 (US)
(72) Inventor: Lawson, Dennis L., Brunswick, Ohio (US); Schmitz, Theodore J., Avon Lake, Ohio (US)
(74) Representative: von Kreisler, Alek, Dipl.-Chem.

(57) **Abstract**

Disclosed are rigid and semi-rigid, impact modified halopolymer compositions and methods for reducing the heat release on exposure to an incident flux by the incorporation of an organo-amine molybdate and antimony oxide. Articles made including extruded sheets, non-sheet profiles and injection molded articles exhibit a total heat release rate of less than 65 kW/m² and a peak heat release rate of 65 kW-min/m² measured by means of the OSU rate of heat release calorimeter according to FAR 25.853. The preferred compound embodiments comprise post-chlorinated polyvinyl chloride, impact modifier, stabilizer, lubricant, melamine molybdate, antimony trioxide, pigment and colorant.

## Description

### Field of The Invention

This invention pertains to formulated compounds of chlorinated polyvinyl chloride (CPVC) and methods for reducing heat release. Relevant art includes flame and smoke suppressed PVC compounds, particularly rigid compounds.

### Background of The Invention

Thermoplastic halogenated polymers are firmly established as useful starting ingredients for flame retarded, smoke suppressed articles of manufacture. Halopolymers referred to herein include polyvinyl chloride, chlorinated polyvinyl chloride, polyvinyl fluoride, polyvinyldene halides, as homopolymers, co-polymers and mixtures. An immense effort has been expended in the art and science of thermoplastic compounded halopolymers in applications aimed at minimizing the hazards of catastrophic fires.

A variety of classes of individual additives have been used and many synergistic compositions of matter developed.

Reference is made to the use of molybdenum compounds in the suppression of smoke by the following U.S. Patents: 4,053,451, 4,892,683, 4,464,495, 4,098,753 and 3,883,482.

Thus, there are combinations of organo-molybdenum compounds with copper compounds (U.S. 4,053,451); ammonium octamolybdate, aluminum trihydrate, and brominated ester plasticizer (U.S. 4,892,683); amine molybdate, copper oxalate, alumina trihydrate; alkaline earth metal carbonate, and titanium dioxide (U.S. 4,464,495) and molybdenum oxide/antimony oxide and plasticizer (U.S. 4,098,753).

With regard to the use of antimony compounds with PVC in reduction of smoke release, the following U.S. Patents are pertinent: 4,360,624, 4,670,494, 4,129,535 and 4,147,690. Thus, antimony oxides such as Sb₂O₃ are known in combination with zinc oxide and magnesium oxide (U.S. 4,360,624); Sb₂O₃ in combination with magnesium oxide, aluminum trihydrate and zinc borate (U.S. 4,670,494); magnesium hydroxide, zinc borate and Sb₂O₃ (U.S. 4,129,535); and a combination of aluminum trihydrate, Sb₂O₃ and magnesium hydroxide (U.S. 4,147,690).

In evaluating the performance of compounded halopolymers in a fire there are several factors to be considered in determining the hazard associated with any material. These factors include the ignitability of the material, it's flammability, the amount of heat released from the material when it burns, the rate of heat release, the smoke production tendency and the toxic potency of the smoke.

As a general principle, materials which do not ignite in a fire will not contribute to increased hazards. Because most organic materials are ignitable, further characterization must be made. Halopolymers are among the least ignitable polymeric materials and contribute generally low flame spread rates. Assuming that a very large, continuing heat source is available such as a fire, this fire will spread as burning materials release sufficient heat to ignite adjacent materials. The rate of heat released for the material in question must be high enough to overcome the loss of heat to the surrounding air space which is at a relatively lower temperature. Much effort has resulted in halopolymer compounds formulated for low ignitability and low smoke generation, however less attention has been focused on reduction of heat release both in terms of peak heat and the rate of heat release under the influence of an incident flux as in a fire. It has been found through researching heat and smoke supression, that minimizing of smoke release does not necessarily lead to a reduction in heat release. In the art directed to flexible articles made from plasticized polyvinyl halide, reliance can be drawn from the use of halogenated plasticizers. Also the plasticization process yields an inherent impact strength improvement. Whereas for rigid or semi-rigid polyvinyl halide, polyvinyl fluoride or post-chlorinated polyvinyl chloride, there must be added an impact modifier. Impact modifiers are fuel sources and contribute to the combustion of articles. It would be advantageous therefore to provide rigid thermoplastic halopolymer articles which are impact modified but which have reduced heat release in order to lessen the spread of fire to adjacent materials.

The hazards of burning aircraft interiors have been a source of increasing technical and regulatory focus. For interior aircraft components such as wall panels, tray tables, seat backs, luggage compartments, fittings, window frames and the like, the Federal Aviation Administration per regulation FAR 25.853, para. a-1, limits the allowable heat released from an ignited article under controlled test conditions. This invention pertains to the discovery of rigid articles which meet this standard, that is articles which under test conditions specified will release total heat at a rate of no more than 65 Kw-min/m² under a heat flux density of 3.49 W/cm² for 2 minutes, and during the 2 minute test will release heat at a peak rate of no more than 65 Kw/m².

### Summary of The Invention

This invention pertains to a method of reducing the heat release under an incident flux of an impact modified rigid to semi-rigid halopolymer compound, in particular, the invention pertains to the reduction of the total heat release rate, and the reduction of the peak heat release rate for an impact modified, rigid to semi-rigid halopolymer. The invention is also directed to formed articles such as an extruded sheet or a molded article which is formed into useful shape such as a wall panel, tray table, seat frame or back, luggage compartment, and window panel having reduced heat release under an incident flux, comprising a rigid to semi-rigid thermoplastic CPVC, an impact modifier, an antimony compound, a molybdenum compound and optionally aluminum trihydrate. The preferred method of reducing the heat release characteristics for a rigid or semi-rigid halopolymer compound is accomplished by incorporating as an intimate mixture with CPVC, an effective amount, specified herein below, of an organo-amine molybdate and antimony trioxide. The most preferred embodiments release heat at a total rate of no more than 55 kW-min/M², and exhibit a peak heat release rate of no more than 55 kW/M² and comprise a combination of CPVC, chlorinated polyethylene, a molybdenum compound, an antimony compound, a stabilizer, at least one pigment and at least one lubricant. More specifically, the articles which meet Federal Aviation Regulation (FAR) 25.853 for heat release rate consist essentially of 100 weight parts of chlorinated polyvinyl chloride, from 5-30, preferably 15-25 weight parts "per 100 weight parts of CPVC" (phr) of chlorinated polyethylene, from 1 to 3 phr of organo-amine molybdate, from 1 to 5 phr of antimony oxide, from 2 to about 5 phr of at least one component selected from the group consisting of polyolefin wax, metal salt of fatty acid, fatty acid, fatty amide, fatty ester, polyol ester, oxidized polyethylene, polymethyl methacrylate, and SAN copolymer, from 2 to 6 phr of a thermal stabilizer for CPVC, and optional pigment(s) and/or colorant(s). The advantage of the present invention is confirmed by measuring heat release by means of the Ohio State University (OSU) rate of heat release calorimeter in accordance with FAR 25,853 para. a-1.

### Detailed Description

Rigid thermoplastic CPVC compound referred to herewith is defined as a plastic that has a modulus of elasticity, either in flexure or in tension, greater than 700 MPa (100, 000 psi) at 23°C and 50% relative humidity when tested in accordance with ASTM Method D747, Test for Stiffness of Plastics by Means of a Cantilever Beam, ASTM Methods D790, Test for Flexural Properties of Plastics and Electrical Insulating Materials, ASTM Method D638, Test for Tensile Properties of Plastics, or ASTM Methods D882, Test for Tensile Properties of Thin Plastic Sheeting. A semi-rigid compound exhibits a modulus of from 70 to 700 Mpa (10,000 to 100,000 PSI).

The articles of manufacture comprise extruded or injection molded shapes made from rigid to semi-rigid CPVC and may include less than 100 phr of one or more halopolymers selected from the group consisting of homopolymers and copolymers of polyvinyl chloride, polyvinyl fluoride, polyvinylidene chloride, polyvinylidene fluoride, chlorinated polyethylene (CPE), chlorinated polypropylene, including rigid to semi-rigid mixtures of these. The other halopolymers enumerated above are commercially available from sources listed in Chemical Week Buyers' Guide, October-1990, Vol. 147 No. 18, New York. In addition, other halopolymer materials are described in detail in the following U.S. Patents: polyvinylidene fluoride - U.S. 4,585,701; polyvinyl chloride - U.S. 5,036,121; chlorinated polyethylene - U.S. 3,299,182 and 4,749,751; and polyvinylidene chloride - U.S. 4,362,834.

Chlorinated polyvinyl chloride is obtained by chlorinating base polymers that are made up of repeating units of vinyl chloride as homopolymers or copolymers including one or more copolymerizable comonomers with vinyl chloride. Suitable comonomers for vinyl chloride include acrylic and methacrylic acids; esters of acrylic and methacrylic acid, wherein the ester portion has from 1 to 12 carbon atoms, for example methyl, ethyl, butyl and ethylhexyl acrylates and the like; methyl, ethyl and butyl methacrylates and the like; hydroxyalkyl esters of acrylic and methacrylic acid, for example hydroxymethyl acrylate, hydroxyethyl acrylate, hydroxyethyl methacrylate and the like; glycidyl esters of acrylic and methacrylic acid, for example glycidyl acrylate, glycidyl methacrylate and the like; alpha, beta-unsaturated dicarboxylic acids and their anhydrides, for example maleic acid, fumaric acid, itaconic acid and acid anhydrides of these, and the like; acrylamide and methacrylamide; acrylonitrile and methacrylonitrile; maleimides, for example, N-cyclohexyl maleimide; olefin, for example ethylene, propylene, isobutylene, hexene, and the like; vinylidene halide, for example, vinylidene chloride; vinyl ester, for example vinyl acetate; vinyl ether, for example methyl vinyl ether, allyl glycidyl ether, n-butyl vinyl ether and the like; crosslinking monomers, for example diallyl phthalate, ethylene glycol dimethacrylate, methylene bis-acrylamide, tracrylyl triazine, divinyl ether, allyl silanes and the like; and including mixtures of any of the above comonomers. The preferred PVC is a polyvinyl chloride homopolymer. Polyvinyl chloride is prepared by conventional polymerization techniques in which vinyl chloride is free-radically polymerized with polymerization initiators and if desired, chain transfer agents by any one of a variety of polymerization techniques including mass polymerization, suspension polymerization, or microsuspension polymerization. The preferred process for preparing PVC is via suspension polymerization. Suspension polymerization techniques are forth in the art as set forth in the Encyclopedia of PVC, pp. 76-85 published by Marcel Decker, Inc. (1976) and need not be discussed in great detail here. Generally, the monomer(s) are suspension-polymerized in an aqueous medium containing: 1) a suspending agent consisting of one or more water-dispersed polymer substances such as polyvinyl alcohol, cellulose ether, partially hydrolyzed polyvinyl acetate, vinyl acetate-maleic anhydride or partially saponified polyalkyl acrylate or gelatine, and 2) a polymerization initiator. Suitable polymerization initiators are selected from the conventional free radical initiators such as organic peroxides and azo compounds. It is preferred to employ an amount of initiator in the range of about 0.01 part by weight parts to about 0.20 weight parts "per 100 parts by weight of vinyl halide monomer" (phm). Where weight parts are expressed "per 100 weight parts of CPVC", this is termed "parts per hundred resin", or "phr". Examples of suitable initiators include lauroyl peroxide, benzoyl peroxide, and acetyl cyclohexyl sulfonyl peroxide. The molecular weight of precursor polyvinyl chloride for the post-chlorinated polymer will range from about 0.1 to about 1.2, preferably 0.3 to 1.1 and most preferredly from 0.5 to 1.0 I.V.. The inherent viscosity is a representative measure of the molecular weight of a polymer and is obtained in accordance with ASTM procedure No. D-1243-66. The lower molecular weight polymers of this invention can be used in applications in which they are injection molded or extruded to form products that may have thin walls, large surface areas, and deep-draw and/or intricate surface detailed parts.

PVC is chlorinated in any conventional manner as known to the art and to the literature to obtain a chlorinated base polymer having generally from about 57 percent by weight up to about 74 percent by weight based upon the total weight of the polymer, preferably from about 61 percent to about 70 percent by weight, and most preferably from about 66 percent to 70 weight percent chlorine.

In the suspension chlorination method, it has been found that a relatively concentrated aqueous suspension of the precursor polymer is desired. A CPVC resin having a density which does not deviate more than 20 percent from the mean density, and a surface area which does not deviate more than 30 percent from the mean surface area is more desirable. A concentration of about 15 to about 35 weight percent of solids in the suspension is preferred. Generally a concentration of the suspension higher than the specified range results in less uniform chlorinated product, while concentrations below 15 percent yield uniform product, but are not as economical. By "aqueous suspension" of PVC base polymer we refer to a slurry-like mixture of base polymer macrogranules suspended in water. Though initially the water is not deliberately acidified by the addition of acid, HCl is formed during the course of the chlorination and is absorbed in the water. This process is particularly directed to a batch process.

It is desired that oxygen be removed from the aqueous suspension before chlorination is initiated. This may be effected in any convenient manner. For example, a hot suspension at a temperature in the range from about 60°C to about 75°C and containing about 30 percent may be introduced into a batch reactor and subjected to a vacuum at that temperature so that it boils. Lower temperatures as low as about 20°C may be employed, but removal of oxygen at such low temperatures is less practical. Removal of oxygen is assisted by agitation of the suspension. After several minutes, depending upon the size of the charge to the reactor, the temperature and the initial oxygen content of the suspension, it is found that essentially all the oxygen has been removed. The same result may be obtained by sparging an inert gas such as nitrogen through the suspension, when the suspension is hot, preferably in the range from 60°C to 75°C. Any conventional test to determine the concentration of oxygen may be used, and it is preferred to have less than 100 ppm of oxygen remaining in the slurry.

During the period when oxygen is removed, the temperature of the suspension may be lowered sufficiently requiring re-heating to a temperature within the range from about 60°C to about 75°C which is the preferred starting temperature range for initiation of the photo-chlorinated reaction. Such heating as may be required is preferably done after Cl₂ is sparged into suspension from a liquid Cl₂ cylinder until the pressure in the reactor reaches about 25 psig, at which point the suspension is saturated with Cl₂. It is preferred that this pressure be somewhat higher, that is in the range from about 35 psig to about 100 psig, to get the optimum results, though a pressure as low as 10 psig and higher than 100 psig may be employed. The amount of Cl₂ charged to the reactor is determined by weight loss in the Cl₂ cylinder.

After the reactor is pressurized with chlorine, the reactor is preferably brought up to a "soak" temperature in the range from about 60°C to about 75°C at which soak temperature the suspension is maintained under agitation for a soak period in the range from about 1 minute to about 45 minutes. The soak period appears to have an unexpectedly beneficial function. It provides Cl₂ the opportunity to diffuse extensively into the macrogranules. A longer soak period, under pressure, may be used if the soak temperature is lower than 60°C, but a soak period longer than 45 minutes is undesirable.

It must be recognized that the relatively high pressure in the reactor, which pressure is preferably maintained constant also retards the removal of HCl and HOCl from within the macrogranules. Excessive pressure adversely affects the porosity of the macrogranules to the detriment of the stability of the chlorinated product.

It is desirable to complete the chlorination reaction under photo-illumination, preferably with ultraviolet light, or the desired conversion of base polymer to chlorinated base polymer product does not occur.

Chlorination proceeds at a rate which depends upon the pressure and temperature within the reactor, higher rates being favored at higher temperature and pressure. It is feasible to carry out the chlorination process without a soaking step, but such a process is less economical. When pressure and temperature are raised to a level sufficient to give a favorable chlorination rate without a soaking step, the uniformity of the chlorinated base polymer product suffers.

After the "soak" period, the suspension is photo-illuminated. A relatively high and constant intensity of light is desirable preferably in the range from about 5 watts to about 50 watts per gallon of suspension.

It has been found that carrying out a chlorination reaction under widely fluctuating elevated temperature and pressure while photo-illuminating the suspension does not produce CPVC of desired quality and stability. It is desirable to commence the chlorination reaction at a temperature in the range from about 60°C to about 75°C, and then to finish the reaction at an even higher temperature generated because of the reaction. No additional heat is required to be added to the reactor because the self-generated heat is sufficient to produce the desired increase in temperature, until it reaches a finishing temperature in the preferred range of from about 80°C to about 100°C. A finishing temperature as high as 120°C may be employed if the pressure is high enough. The "finishing temperature" is so termed because it is the temperature at which the chlorination reaction is "finished", that is, a preselected chlorine content in the CPVC has been attained. The precise finishing temperature at which the autogenously ramped temperature levels off, will depend on several factors. It is most preferred to adjust the soak temperature, the mass of resin, and the level of photo-illumination so that the temperature is "ramped" by the heat of reaction until it levels off at a finishing temperature of about 100°C.

The temperature of chlorination should be maintained below the Tg of the resin in the suspension. The reaction temperature may be permitted to rise because the Tg of the resin rises as the reaction proceeds to completion. It will also be evident to one skilled in the art, that the problem of maintaining the finishing temperature of the reaction substantially constant at about 90°C during the exothermic chlorination reaction in a batch reactor requires highly effective heat transfer control or the resin will "burn". This problem is exacerbated as the size of the reactor increases, and is especially onerous in a 2500 gallon, or larger, reactor.

The progress of the chlorination reaction depletes the free chlorine in the reactor and the additional Cl₂ is introduced into the reactor to maintain the pressure, and the desired level of conversion of base polymer. The level of conversion is estimated by the amount of Cl₂ fed from the Cl₂ feed cylinder. It is not desirable to permit the pressure in the reactor to fluctuate more than 20 percent as the effects of wide fluctuations are reflected in poorer quality chlorinated base polymer.

When greater than about 50 percent of all the vinyl chloride monomeric units have been chlorinated with at least one atom of chlorine, the product can be worked-up. The suspension is preferably not cooled but dumped to be centrifuged and the chlorinated polymer freed from the aqueous phase, after which HCl is removed from the product, preferably by neutralizing with an aqueous solution of an alkali metal hydroxide. The product is then washed with water to free the chlorinated polymer of residual alkali, and dried, all in a conventional manner, except that the temperatures at which the operations are carried out may be in the range from about 60°C to about 100°C, which are higher than conventionally used.

The chlorinated PVC cannot be considered an equivalent of unchlorinated PVC. Chlorinated PVC is a distinctly different material with different structure, properties, characteristics, and utility. Chlorinated PVC exhibits different physical and chemical properties from polyvinyl chloride as evidenced by higher density, higher Tg electrical properties, improved resistance to solvent and chemical attack, higher extrusion temperature, greater susceptibility to degradation, higher melt viscosity, etc. For instance, heat distortion temperature for homo-PVC is about 75°C whereas it is 80°C to 110°C for chlorinated PVC and varies directly with chlorine content from 60 to 75%. Likewise, Vicat softening point for PVC is 80°C whereas it is 112°C for chlorinated PVC.

The chemical structure of chlorinated polyvinyl chloride is different from that of PVC. Whereas PVC has the following structure: 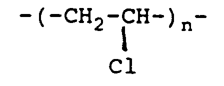
chlorinated PVC is a combination of three structures, I, II and III, one of which corresponds to PVC, as shown below: 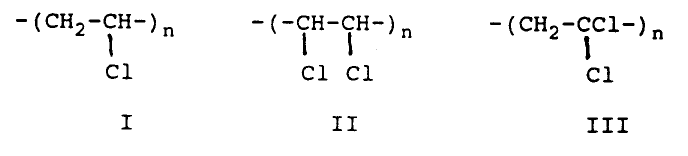
The proportion of chlorinated PVC structures I, II and III varies with chlorine content, the higher the chlorine content the larger proportion of structures II and III and the smaller proportion of structure I. Correlation between chlorine content and proportion of structures I, II and III in unchlorinated and chlorinated PVC is set forth in Table A, below:

**TABLE A**

| | Chlorine Content | Structure | | |
|---|---|---|---|---|
| | | (I) | (II) | (III) |
| PVC | 56.6 | 100 | 0 | 0 |
| chlorinated PVC | 57.5 | 97.2 | 2.8 | 0 |
| " | 61.2 | 81.1 | 17.5 | 1.4 |
| " | 63.2 | 71.1 | 26.8 | 2.1 |
| " | 69.5 | 31.1 | 49.9 | 19.0 |
| " | 72.6 | 5.5 | 60.5 | 34.0 |

On the basis to Table A, chlorinated PVC with a chlorine content of about 60% contains about 80% of structure I that corresponds to unchlorinated PVC, about 17% of structure II, and about 1% of structure III whereas at 75% chlorine content, chlorinated PVC contains less than 5% of structure I that corresponds to PVC, more than 60% of structure II, more than 35% of structure III.

There is no simple extrapolation of PVC to CPVC compounds particularly where heat and smoke release properties are concerned.

The invention herein is also directed to extruded sheet articles made from the low heat release compound. In this instance, post-chlorinated polyvinyl chloride when used for sheets will preferably have an inherent viscosity (IV) measured per ASTM-D1243 on the precursor of from about 0.50 to about 0.75. This invention is also directed to non-sheet extruded profiles. In this instance where post-chlorinated polyvinyl chloride compounds are used to form non-sheet extruded profiles, the IV ranges preferably between about 0.75 and 1.10 and wherein the chlorine content is preferably from about 65% to about 70%. Chlorine levels which are below about 65% for profiles have insufficient melt strength and present problems in shape retention during melt processing.

Thermal and UV stabilizers can be utilized such as various organo tins, for example "butyl tin", dibutyltin-S-S'-bi-(isooctylmercaptoacetate), dibutyl tin dilaurate, dibutyltin di-2-ethylhexyl thioglycolate dimethyl tin diisooctyl-thioglycolate. Secondary stabilizers may be included for example a metal salt of phosphoric acid, polyols, and epoxidized oils. Specific examples of salts include water-soluble, alkali metal phosphate salts, disodium hydrogen phosphate, orthophosphates such as mono-,di-, and tri-orthophosphates of said alkali metals, alkali metal polyphosphates, -tetrapolyphosphates and - metaphosphates and the like. Polyols such as sugar alcohols, and epoxides such as epoxidized soya oil can be used. Typical levels of secondary stabilizers can range from about 0.1 wt. parts to about 7.0 wt. parts per 100 wt. parts halopolymer (phr). In addition, antioxidants such as phenolics, BHT, BHA, various hindered phenols and various inhibitors like substituted benzophenones can be utilized.

In order to develop useful physical properties in the formed articles, impact modifiers are necessary. The incorporation of impact modifiers presents the addition of a fuel source which is detrimental to the heat release tendency, yet the method of this invention is effective with a compound containing impact modifier, lubricant and/or processing aids included in typical compounds, some of which are illustrated in the examples below.

Preferred levels of impact modifier are less than 20 phr (parts per 100 parts CPVC). More preferred levels of impact modifier are from 3 to 15 phr, still more preferred are levels from 3 to 10 and most preferred are levels ranging from 3 to 8 phr. These include acrylonitrile butadiene styrene terpolymers (ABS), methacrylate, acrylonitrile, butadiene, styrene (MABS) polymers and methacrylate butadiene styrene polymer (MBS). Other impact modifiers are disclosed in Plastics compounding, Nov./Dec., 1983: "Update: Impact Modifiers for Rigid PVC," by Mary C. McMurrer. Impact modifiers generally contain a rubbery core component. Various embodiments are commercially available and include polybutadienes jointly graft-copolymerized with styrene and methyl methacrylate (MBS). Paraloid® KM-653, BTA-733 from Rohm and Haas, or Kanegafuchi B-56 and B-22KO MBS types; polybutadienes jointly graft-copolymerized with acrylonitrile and styrene (ABS), low rubber types are preferred; nitrile rubber blended with SAN; polybutadienes jointly graft-copolymerized with acrylonitrile and alpha-methyl styrene; ethylene-propylene-diene rubber, referred herein as EPDM graft-copolymerized with vinyl chloride, EPDMs jointly graft-copolymerized with styrene and acrylonitrile, polybutadienes graft-copolymerized with styrene, methyl methacrylate and acrylonitrile; acrylate impact modifiers such as those comprising polybutyl acrylate graft-copolymerized with methyl methacrylate, (KM®-323B, KM®-330 Trademark of Rohm and Haas); polybutyl acrylate and/or poly 2-ethyl hexyl acrylate jointly graft-copolymerized with methyl methacrylate and styrene, polybutyl acrylate graft polymerized with acrylonitrile and styrene (Blendex® 975,977, or 979-Trademark of General Electric); butyl rubbers graft-copolymerized with vinyl chloride, block copolymers of styrene-butadiene-styrene, radial block copolymers of styrene and butadiene, styrene-butadiene rubbers, vulcanizable acrylate rubbers, EPDMs and the like. Various preferred impact modifiers are commercially available and specified hereinbelow. Chlorinated polyethylene (CPE) is an exemplary impact modifier. Percent chlorine content preferably ranges from about 25% to 40%. CPE containing 25% and 36% are commercially available from Dow Chemical Inc. under the Tyrin® mark.

Exemplary antistats are commercially available under the Glycolube® trademark of Lonza Corp. An exemplary antifogging agent includes the alkyl phenol ethoxylates as for example those commercially available under the Surfonic trademark of Texaco, Inc.

Exemplary lubricants are the various hydrocarbons, such as paraffins, paraffin oils, low molecular weight polyethylene, oxidized polyethylene, fatty acids such as stearic acid, fatty alcohols such as cetyl, stearyl, or octadecyl alcohol; metal soaps such as calcium or zinc salts of stearic acid; fatty amides of organic acids such as stearamide, ethylene-bis-stearamide; fatty esters and partial esters such as butyl stearate, polyol esters such as glycerol monostearate, hexaglycerol distearate; and ester waxes such as stearyl esters. Henkel Co. produces a variety of useful proprietary fatty esters under the Loxiol® mark. Combinations of internal and external lubricants may also be used. Lubrication of the halopolymer compounds of the present invention is a complex art. Since many lubricants can be combined in countless variations, the total amount of lubricant may vary generally from about 2 to 10 phr, preferably from 2 to about 6 phr. Optimization of particular individual lubricant formulations is beyond the scope of the present invention, and can be achieved by one skilled in the art with routine trial and error, in this context, to minimize added fuel sources yet achieve adequate lubrication.

Antimony compounds include antimony trioxide and alkali antimonates like sodium antimonate. Antimony trioxide is commercially available from M&T Chemicals, and Asarco, Inc. An effective amount ranges from 1 to 10 phr preferably 1 to 3 phr. It was observed that use of antimony compounds did not reduce the smoke levels but did reduce heat release.

Exemplary processing aids are acrylic polymers such as polymethylacrylate based materials. Adjustment of melt viscosity can be achieved as well as increasing melt strength by employing commercial acrylic process aids such as those from Rohm and Haas under the Paraloid® Trademark. Paraloid® K-120ND, K-120N, K-175, and other processing aids are disclosed in The Plastics and Rubber Institute; International Conference on PVC Processing, April 26-28 (1983), Paper No. 17. One useful processing aid is a copolymer of styrene and acrylonitrile, (SAN) such as 75:25 styrene: acrylonitrile copolymer made by batch emulsion polymerization in which a chain transfer agent is used.

Exemplary fillers are optional and include clay, barytes, calcium carbonate and talc. Preferred opacifying pigments when used are the various titanium dioxides (TiO₂) which are commercially available. Useful TiO₂ types are coated or uncoated, rutile titanium dioxide powder. One commercial grade is Ti-Pure® R-100 from E.I. DuPont De Nemours and Co. Inc. (DuPont). Hydrated magnesium hydroxide and aluminum trihydrate are especially preferred as a smoke retarding filler.

The organo-amine molybdates are prepared by the treatment of an organo-amine with MoO₃, molybdic acid or a molybdenum salt such as ammonium molybdate, ammonium dimolybdate, ammonium heptamolybdate (also known as ammonium paramolybdate), ammonium octamolybdate, sodium molybdate, ammonium dimolybdate, ammonium heptamolybdate, sodium molybdate, and the commercial "molybdic acid" which primarily consists of one or more ammonium molybdates. The preparation of organo-amine molybdates is described in U.S. Pat. No. 4,053,451 which is incorporated herein by reference.

Amines suitable for preparing the organo-amine molybdates used in this invention may contain from 1 to 40 carbon atoms and from 1 to 10 primary, secondary or tertiary amine groups or a mixture thereof; more preferably from 1 to 20 carbon atoms and 1 to 4 primary amines or heterocyclic secondary amine groups. Examples of organo-amines include aliphatic, alicyclic, aromatic and heterocyclic amines. Aliphatic amines include ethylamine, ethylenediame, 1,2-propanediamine, 1,7-heptanediamine, 1,8-octanediamine, 1,10-decanediamine, 1,12-dodecanediamine and the like. Also included are aliphatic polyamines such as diethylenetriamine, triethylenetetramine, bis(hexamethylene) triamine, 3,3'-iminobispropylamine, quanidine carbonate, and the like. Other suitable amines include alicyclic diamines and polyamines such as 1,2-diaminocyclohexane, 2',4-diamino-1-propyl-4-methylcyclohexane, and the like; aromatic amines as aniline, and maphthylamine; and heterocyclic amines such as melamine, N,N-dimethylaniline, pyridine, piperazine; hexamethylenetetraaime; 2,2,3-trimethyl decahydroquinoline, 2,4,6-tri(-morpholino)-1,3,5-triazine; and N-(aminoalkyl)piperazines wherein each alkyl group contains from 1 to 12 carbon atoms, more preferably 1 to 6 carbon atoms, such as N-(2-aminoethyl)piperazine, and the like. Examples of suitable polymeric amines include polyethyleneimine, polyvinylpyridine, polyvinyl pyrrolidine, and poly(2,2,4-trimethyl-1,2-dihydroquin-olyl). Excellent results are obtained using melamine, piperazilne, and alkyl amines wherein the alkyl contains 1 to 8 carbon atoms.

Useful melamine and substituted melamines have the formula: 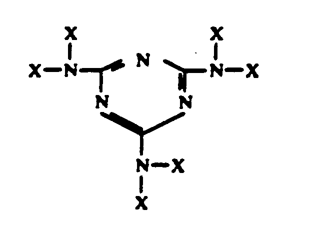
wherein X is hydrogen or an alkyl, alicyclic, aralkyl, alkaryl, aryl or heterocyclic group containing from 1 to 10 atoms of C,O,S and/or N. Two X's on each of one or more nitrogen atoms may also be joined together to form a heterocyclic ring such as a morpholino group in 2,4,6-tri(morpholino)-1,3,5-triazine. Other examples of suitable substituted melamines include N,N',N''-hexaethylmelamine; 2-anilino-4-(2',4'-dimethylanilino)-6-piperidino-1,3,5-triazine; and 2,4,6-tri(N-methylanilino)-1,3,5-triazine. The amine molybdate normally contains from about 1 to 2 moles of molybdenum per mole of amine. Thus, melamine molybdate can be prepared in aqueous formic acid as follows: 10 grams of melamine, 7.30 grams of formic acid, and 250 ml water are dissolved together by refluxing in a 500 ml. round-bottomed flask equipped with a stirrer and water-cooled condenser;
26.95 grams of ammonium dimolybdate are dissolved in 50 ml. hot water and then added to the first solution. A white precipitate forms immediately. The reaction mixture is refluxed for 1 hour, cooled to room temperature (about 25°C.), and filtered through Whatman No. 42 filter paper that is backed by a Macherey, Negel and Company (Duren, German6) MN-85 filter paper supported on a Buchner funnel. A white solid is recovered and washed three times with water. The solid is vacuum dried for 3 hours at 120°C.

The amine molybdates used in this invention may be in the form of polycrystalline or amorphous fine powders. The amine molybdate may have an average particle size from about 0.01 to about 200 microns, and even more preferably from about 0.5 to about 50 microns. Commercial molybdate compound is available from Sherwin Williams under the Chemguard® mark.

The method of compounding is straightforward as any high intensity method to uniformly dry mix, then fuse into cubes in a melt process such as by extrusion, is suitable. The differences in process handling of CPVC compared with polyvinyl chloride-based compounds relate mainly to the temperature and viscosity differences.

In the preparation of compounds, the components are generally combined and mixed with powder mixing equipment such as a Henschel mixer, or ribbon blender and can be cubed or preferably left in powder form. Alternatively, less than all of the components can be combined first, with the remaining components(s) combined in a multiple screw extruder. The powder composition of the present invention is generally processed in conventional extrusion machinery such as a twin screw extruder or a single screw extruder or other processing means including injection molding for example for interior trim components among the myriad useful articles. The thermoplastic powder compositions containing CPVC are processed at conventional melt temperatures from about 175°C to about 235°C, and preferably from about 200°C to about 225°C for CPVC based compound.

An extruder generally has a conveying means such as a hopper through which the material is charged, an intermediate screw processing portion, and a final die through which the material is discharged in the form of an extrudate. In most cases, output rates are dependent upon the extruder size, drive power and screw design. The machine characteristics applicable to low shear melt process of the CPVC compounds of the present invention include:
- Head pressure rating of at least 7500 psi (51.7 Mpa).
- Extruder drive/gearbox capable of generating high torque at low rpm.
- Vacuum venting to remove volatiles, moisture and entrapped air.
- A barrel L/D of at least 16/1 for twin screw; generally at least 20/1 for single screw.
- Temperature controllers able to control within 5°F or better.
- Accurately controllable powder metering screw for powder compounds.

Methods for making the articles of this invention entail the extrusion of sheets, extrusion of non-sheet profiles, and injection molding of various shaped articles. These melt process methods, as adapted to handling CPVC embodiments herein disclosed, require several considerations in order to successfully make the aforementioned articles. Firstly, all heated surfaces which contact the melt must be well chromed or must be made from stainless steel. Very good temperature control devices should be used. Halopolymers are shear sensitive and excessive extruder screw speed (rpm) must be avoided as the localized melt temperature can reach degradation conditions.

With the use of relatively smaller ( <10 oz. shot size ) injection molding devices, ie., those having a screw diameter of 1.25 to 1.75 inches and 75 to 100 tons of clamping force, screw speed should be maintained at no more than about 75 rpm. In the extruder barrel, a ramped temperature profile should be maintained beginning with a temperature of 350°F at the hopper end and rising to about 370°F at the nozzle end. Under normal working conditions the actual melt temperature will range at the nozzle between about 390°F and about 410°F. For a relatively larger injection molder, ie., one having a screw diameter of 2.0 to 2.5 inches and a clamping force of 250 tons or more, the screw speed should not exceed about 60 rpm, and typically is in a range of from 35-40 rpm. This is due to higher work levels for a larger diameter screw resulting in higher tangent velocity. A ramped barrel temperature profile is advisable with a zone nearest the hopper set at 335°F and the zone nearest the nozzle-end at no more than about 360°F.

In the method of extrusion of sheet articles an extruder is coupled to a sheet extrusion die typically 48 inches wide and larger. The screw diameter of a commercial sized device usually ranges from 3.5 to 4.5 inches. There should be used 5 barrel temperature zones ranging from 310° to 330°F at the hopper-end ramping up to 360°F at the nozzle end. Screw speed should not exceed about 15 rpm. The thickness gauge of sheet articles can range from 0.020 inches to 0.250 inches. Most sheet articles for aircraft interior panels and trim pieces range from about 0.020 to about 0.060.

In the method for making non-sheet extruded profiles, extruders ranging from a diameter of 2.5 to 3.5 are generally sued. Barrel temperatures range from 310°-320° at the hopper end to about 355° at the nozzle end and screw speeds should not exceed about 35 rpm. There can be used calibrating blocks at the exit end to assist in proper dimension sizing as the hot profile is cooled. Air streams can be used to improve heat loss, and for more close tolerances, vacuum water sizing devices can be used. The extent to which one chooses to employ calibrator blocks and air or water sizing will depend on a variety of costs and benefits under any commercial setting, driven mainly by the volume of any one profile article and the number of different profiles made with a particular production set. These considerations are beyond the scope of the disclosure and go to the myriad factors in the choice of the best economical conditions in a commercial setting.

In the instance where a low heat release compound is derived from rigid polyvinyl chloride, there are several considerations. For dry powder blends, a high intensity mixer such as a Henschel mixer is also suitable. The powder temperature should not rise above fusion temperatures. Melt mixing of powder can be accomplished on a Banbury®, Farrel® Continuous Mixer or a Buss-Kondux kneader pelletizer. A twin screw extruder is also suitable for direct compounding, followed by extrusion or injection molding. Specimens prepared in the examples below were measured for heat release (RHR) by means of the Ohio State University (OSU) rate of heat release calorimeter per FAR 25.853 para. a-1 test requirements. Sample sizes were 6 in.² (152.4 X 152.4mm) and a thickness of from 1 to 1.5 mm in a vertical orientation and with incident flux of density of 3.49 Kw/cm². The results reported are: the total heat released after 2 min. exposure to the heat source (RHR @ X min. in kW/m²), the maximum rate of heat release in kW/m²).

The ingredients of all examples were first high intensity mixed as a powder blend on a Henschel mixer followed by mastication to a uniform melt in a Banbury mill. Slabs from the mill were cut and compression molded in a 6x6 in. die. Molded specimen plaques were tested in the calorimeter.

In preliminary experiments it was found that a CPVC compound containing about 7 phr of fuel source consisting of stabilizer and lubricant plus a combination of MBS and acrylic (10 phr total) impact modifiers, that melamine molybdate contributed to higher heat release when the amount was increased beyond 2.25 phr. Therefore, the effective amount of organo-amine molybdate is from about 1 to about 3 phr when the total amount of fuel source ingredients besides CPVC and molybdate is below about 20 phr.

### EXAMPLES- CONTROLS

Illustration of the problem of the use of impact modifiers in relation to a rise in heat release can be seen in the following control compounds. Test specimens from the compounds were measured for total heat release rate (Kw-min/m²) and peak heat release (Kw/m²).

| Component | Control | |
|---|---|---|
| | A | B |
| CPVC (63.5% cl) | 100 | 100 |
| Stabilizer¹ | 2.5 | 3 |
| Process aid | 1 | 1 |
| TiO₂ | 5 | 5 |
| Lubricants | 2 | 2.75 |
| Melamine molybdate | 2.25 | 2.25 |
| Impact Modifier² | - | 10 |
| Izod Impact (23°C) | 0.4 | 3.0 |
| Heat release rate total (RHR) 2 min at 3.49 W/cm² | 38 | 75 |
| Peak release rate | 40 | 58 |

| | | |
|---|---|---|
| ¹ dimethyltin bis iso-octyl thioglycolate | | |
| ² MBS and acrylic | | |

As shown above, the use of impact modifiers improve impact strength but results in an undesirable rise in heat release.

### Examples 1-4

The following examples 1-4 illustrate the invention. Impact modified CPVC containing 10 phr or less of impact modifiers MBS and acrylic exhibit desired impact strength as well as excellent heat release rates when tested as 6 in² x 0.060 inch plaques to which are laminated a 4 mil color ply layer to simulate an actual interior panel for aircraft. The compounds were Henschel mixed and milled. Samples were compression molded in a 6 in² plaque mold, and 4 mil sheets were hot laminated to the plaques. The OSU heat release device was calibrated according to FAR 25. 853 and heat release rates measured under a heat flux density of 3.49 W/cm² for 2 minutes with the following results.

| | 1 | 2 | 3 | 4 |
|---|---|---|---|---|
| CPVC | 100 | 100 | 100 | 100 |
| Stabilizer | 3 | 3 | 3 | 3 |
| MBS | 7 | 6 | 6 | 5 |
| Acrylic impact mod. | 2 | 3 | 2 | 3 |
| Acrylic process aid | 1 | 1 | 1 | 1 |
| Lubricant | 1 | 1 | 1 | 1 |
| Lubricant | 1.75 | 1.75 | 1.75 | 1.75 |
| Melamine molybdate | 2.25 | 2.25 | 2.25 | 2.25 |
| Ti0₂ | 5 | 5 | 5 | 5 |
| Antimony trioxide | 1 | 1 | 1 | 1 |
| IZOD (1/8'' 23°C) | 3.0 | 2.6 | 1.9 | 1.5 |
| TOTAL RHR (kW-min/m²) | 58 | 54 | 58 | 51 |
| Peak RHR (kW/m²) | 56 | 60 | 59 | 56 |
| NBS Smoke (Dₛ 4 min) | 194 | 169 | 167 | 145 |

As is shown above, the compounds when formed into test plaques have improved impact strength by comparison to the controls, and the heat release rates are reduced compared to the impact modified controls. Thus, in a combination of two impact modifiers selected from the group consisting of ABS, MBS, MABS and acrylic, the preferred total amount is between 5 phr and about 10 phr. If higher amounts are employed, the heat release performance is reduced to less than the desired.

### Examples 5 and 6

Examples 5 and 6 test plaque articles of the invention demonstrated reduced heat release for an impact modified compound on the addition of 1.0 phr of antimony trioxide in combination with melamine molybdate. The compounds were as follows:

| Component | Example | |
|---|---|---|
| | 5 | 6 |
| CPVC (IV. 0.68 63.5% cl) | 100 | 100 |
| Stabilizer¹ | 3 | 3 |
| MBS impact modifier² | 5 | 5 |
| Acrylic impact modifier³ | 5 | 5 |
| Lubricants | 2.75 | 2.75 |
| Melamine molybdate | 2.25 | 2.25 |
| Sb₂O₃ | 0 | 1.0 |
| TiO₂ | 5 | 5 |
| Total heat release rate (RHR) (Kw-min/m²) | 79 | 58 |
| Peak (Kw/m²) | 58 | 59 |

| | | |
|---|---|---|
| ¹ Witco Mark® 1900 dimethyltin bis R ISO octyl thioglycolate | | |
| ² Kane-Ace® MBS | | |
| ³ Paraloid® acrylic impact modifier | | |

| Component | Example | |
|---|---|---|
| | 7 | 8 |
| CPVC 63.5 cl* | 50 | 50 |
| CPVC 67 cl* | 50 | 50 |
| Stabilizer¹ | 3 | 3 |
| MBS impact modifier² | 5 | 5 |
| Acrylic Imp. Mod. | 5 | 5 |
| Lubricants | 3.75 | 3.75 |
| Melamine molybdate | 2.25 | 2.25 |
| Sb₂O₃ | 0 | 1.0 |
| Ti0₂ | 5 | 5 |
| Total heat release rate (Kw-min/m²) | 85 | 71 |
| Peak heat release (Kw/M²) | 66 | 61 |

| | | |
|---|---|---|
| * I.V. 0.68 | | |
| ¹ Witco Mark® 1900 | | |
| ² Kane Ace MBS | | |

| Component | Example | |
|---|---|---|
| | 9 | 10 |
| CPVC 70% cl (0.68 I.V.) | 100 | 100 |
| Stabilizer¹ | 2.5 | 2.5 |
| Chlorinated polyethylene² | 20 | 20 |
| Lubricants | 2.5 | 2.5 |
| Melamine molybdate | 2.25 | 2.25 |
| Sb₂O₃ | 0 | 1.0 |
| TiO₂ | 5 | 5 |
| Total heat release rate (Kw-min/m²) | 58 | 40 |
| Peak heat release (Kw/m²) | 59 | 47 |

| | | |
|---|---|---|
| ¹ Tin thioglycolate | | |
| ² 36% Chlorine Tyrin®3611 Dow Chemical | | |

### Examples 11-12

Compounds were prepared to illustrate the effects of a combination of low levels of melamine molybdate, antimony trioxide and aluminum trihydrate on heat and smoke release. Preparation methods of the previous examples were used. Molded plaques were tested as before.

| Component | Example | |
|---|---|---|
| | 11 | 12 |
| CPVC (63.5% cl) | 100 | 100 |
| Stabilizer-Methyl tin | 3 | 3 |
| MBS impact modifier | 5.5 | 5.5 |
| Acrylic impact modifier | 3 | 3 |
| Process aid | 1 | 1 |
| Lubricants | 2.75 | 2.75 |
| Melamine molybdate | 2.25 | 2.25 |
| Antimony trioxide | 0.5 | 1.0 |
| Aluminum trihydrate | 0.5 | 1.0 |
| IZOD (1/8'' 23°C) | 2.5 | 2.4 |
| TOTAL RHR | 53 | 49 |
| Peak RHR | 62 | 52 |
| NBS smoke release (Dₛ 4 min) | 156 | 174 |

It was noted that despite an unexpected increase in smoke release of Example 12 compared with Example 11, there was a reduction in heat release rate upon the increase in antimony and aluminum trihydrate.

## Claims

1. In a method for reducing the total rate of heat release and the peak heat release rate of a rigid article subject to an incident flux, wherein said article comprises CPVC and optionally at least one selected halopolymer from the group consisting of polyvinyl chloride, polyvinyl fluoride, polyvinylidene fluoride, polyvinylidene chloride, chlorinated polyethylene and chlorinated polypropylene, the improvement consisting essentially of incorporating of from 1 to 10 weight parts per 100 weight parts of CPVC and optional halopolymer of an organo-amine molybdate and from 1 to 10 weight parts of antimony trioxide.

2. The method of claim 1 wherein said total rate of heat release is less than 100 kw-min/m² and said peak heat release rate is less than 70 kw/m².

3. The method of claim 1 wherein said halopolymer is post-chlorinated polyvinyl chloride containing from 60% to 70% by weight chlorine and further comprising from 3 to 30 weight parts per 100 weight parts post-chlorinated polyvinyl chloride of an impact modifier selected from the group consisting of ABS, MBS, MABS, acrylic and chlorinated polyethylene, including mixtures.

4. The method of claim 1 wherein said halopolymer is a mixture of 100 weight parts of post-chlorinated polyvinyl chloride and from 10 to 30 weight parts of chlorinated polyethylene and wherein said total heat release rate is no more than 65 kw-min/m² and said peak heat release rate is no more than 65 kw/m².

5. The method of claim 3 wherein said chlorinated polyethylene is present at from 15 to 25 weight parts, and said article further comprises up to 5 weight parts of at least one lubricant, up to 5 weight parts of a thermal stabilizer, and wherein said total heat release rate is less than 55 kw-min/m² and said peak heat release rate is less than 55 kw/m².

6. The method of claim 1 further comprising at least one component selected from the group consisting of fatty acid, polyolefin wax, fatty ester, fatty amide, polyol ester, paraffin wax, oxidized polyolefin, metal carboxylate salt and styrene-acrylonitrile copolymer, polyacrylate.

7. An extruded article exhibiting a heat release rate of no more than 65 kW-min/m² total and no more than 65 kW/m² peak heat release rate, comprising 100 weight parts of chlorinated polyvinyl chloride, from 10 to 40 parts per 100 weight parts of CPVC (phr) of chlorinated polyethylene, from 1 to 3 phr of organo-amine molybdate, from 1 to 5 phr of antimony oxide, from 2 to 5 phr of at least one component selected from the group consisting of polyolefin wax, metal salt of fatty acid, polyol ester, oxidized polyethylene; polymethyl methacrylate, from 2 to 6 phr of a thermal stabilizer for CPVC, a pigment, and colorant(s).

8. The article of claim 6 in the form of a sheet.

9. An injection molded article exhibiting a heat release rate of no more than 65 kW-min/m² total and no more than 65 kW/m² peak heat release rate, comprising 100 weight parts of chlorinated polyvinyl chloride, from 10 to 40 weight parts per 100 weight parts of CPVC (phr) of chlorinated polyethylene, from 1 to 3 phr of organo-amine molybdate, from 1 to 5 phr of an antimony compound, from 2 to 5 phr of at least one lubricant selected from the group consisting of polyolefin wax, metal salt of fatty acid, polyol ester, oxidized polyethylene; polymethyl methacrylate, from 2 to 6 phr of a thermal stabilizer for CPVC, a pigment, and optional colorant(s).

10. The article of claim 6 in the shape of an aircraft interior component selected from the group consisting of a wall panel, tray table, seat frame, seat back, luggage compartment component, and a window panel.

11. The article of claim 9 in the form of a laminated composite further comprising an appearance layer affixed to said sheet.

12. A composition exhibiting a heat release rate of no more than 65 kW-min/m² total and no more than 65 kW/m² peak heat release rate, comprising 100 weight parts of chlorinated polyvinyl chloride, from 10 to 40 weight parts per 100 weight parts of CPVC (phr) of an impact modifier selected from the group consisting of MBS, ABS, MABS and chlorinated polyethylene, from 1 to 3 phr of organo-amine molybdate, from 1 to 5 phr of an antimony compound, from 2 to 5 phr of at least one lubricant selected from the group consisting of polyolefin wax, metal salt of fatty acid, polyol ester, oxidized polyethylene; polymethyl methacrylate, from 2 to 6 phr of a thermal stabilizer for CPVC, a pigment, and colorant(s).

13. The composition of claim 12 wherein said organ-amine molybdate is melamine molybdate.

14. The composition of claim 12 further comprising aluminum trihydrate.

15. The composition of claim 12 further comprising Titanium dioxide.

16. The composition of claim 12 wherein said CPVC contains from 65% to 70% by weight chlorine and an inherent viscosity of 0.75 to 1.10.

17. The composition of claim 12 wherein said chlorinated polyolefin is present at from 15 to 30 phr.

18. The composition of claim 12 wherein said antimony compound is antimony trioxide.

19. The composition of claim 12 wherein said antimony compound is sodium antimonate.

20. The composition of claim 12 wherein said organo-amine has the following structure: 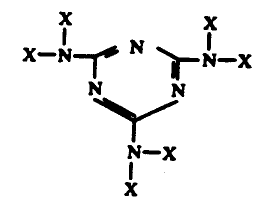 wherein x is hydrogen or an alkyl, alicyclic, aralkyl, alkaryl, aryl or hetercyclic group containing from 1 to 10 atoms of C,O,S and/or N.
